(19) **Europäisches Patentamt**
**European Patent Office**
**Office européen des brevets**

(11) **EP 1 856 811 B1**

(12) **EUROPEAN PATENT SPECIFICATION**

(45) Date of publication and mention
of the grant of the patent:
**08.04.2009 Bulletin 2009/15**

(51) Int Cl.:
**H04B 1/69** (2006.01)

(21) Application number: **06710958.7**

(22) Date of filing: **22.02.2006**

(86) International application number:
**PCT/IB2006/050579**

(87) International publication number:
**WO 2006/090337 (31.08.2006 Gazette 2006/35)**

(54) **METHOD AND APPARATUS FOR SYNCHRONIZING WIRELESS RECEIVER**

VERFAHREN UND VORRICHTUNG ZUR SYNCHRONISIERUNG EINES DRAHTLOSEN
EMPFÄNGERS

PROCEDE ET DISPOSITIF DE SYNCHRONISATION POUR RECEPTEUR SANS FIL

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **25.02.2005 US 656488 P**

(43) Date of publication of application:
**21.11.2007 Bulletin 2007/47**

(73) Proprietor: **Koninklijke Philips Electronics N.V.
5621 BA Eindhoven (NL)**

(72) Inventor: **BIRRU, Dagnachew
Briarcliff Manor, NY 10510-8001 (US)**

(74) Representative: **Schouten, Marcus Maria
Philips
Intellectual Property & Standards
P.O. Box 220
5600 AE Eindhoven (NL)**

(56) References cited:
**WO-A-00/77961**

• **PATENT ABSTRACTS OF JAPAN vol. 2000, no.
03, 30 March 2000 (2000-03-30) & JP 11 355241 A
(MATSUSHITA ELECTRIC IND CO LTD), 24
December 1999 (1999-12-24) & JP 11 355241 A
(MATSUSHITA ELECTRIC IND CO LTD) 24
December 1999 (1999-12-24)**

**Description**

This invention pertains to the field of signal reception, and more particularly to a method and apparatus for synchronizing a receiver to a wireless signal, more specifically a multiband orthogonal frequency division multiplexed (OFDM) signal.

On 14 February 2002, the United States Federal Communication Commission (FCC) adopted a First Report and Order (FCC 02-48) in ET Docket No. 98-153 to allow unlicensed ultra-wideband (UWB) radio transmitters to operate on certain bands, particularly from 3.1 to 10.6 GHz. These UWB radio transmitters operate by transmitting signals occupying a minimum of 500MHz bandwidth. The FCC established standards to prevent interference with other existing radio services.

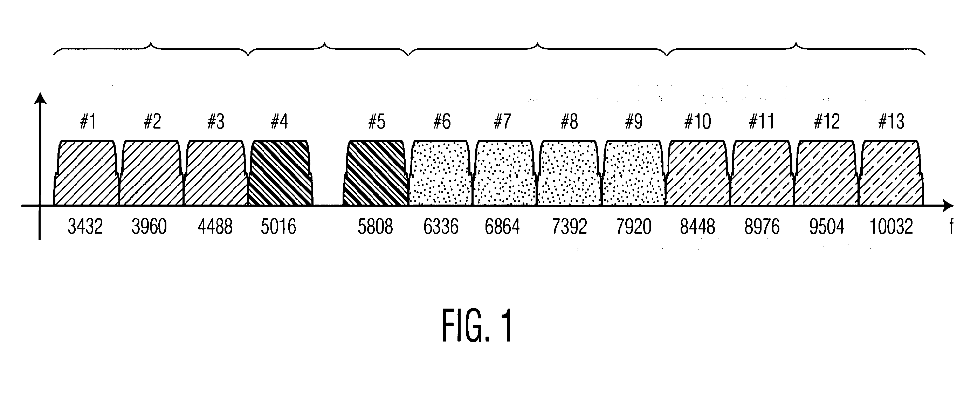

Triggered by FCC actions, the Institute of Electrical and Electronic Engineers (IEEE) formed task group 802.15.3a for Wireless Personal Area Networks using the UWB allocations and technology. One of the proposals to this task group is based on dividing the available spectrum into several bands of 528 MHz each, with transmitters frequency hopping between the bands. As an example, FIG. 1 shows a proposed band plan for UWB operation. Group A, comprising bands 1-3, is intended for 1st generation devices. Other groups can be used by next generation devices.

Within each frequency band, information is transmitted with an orthogonal frequency division multiplex (OFDM) format. More specifically, each band includes 128 orthogonal tones, or sub-carriers, spaced 4.125 MHz apart to occupy 528 MHz. Each data packet comprises a preamble, a header, and a data sequence. A cyclic prefix of 60.6 nsec. is employed to preserve orthogonality between the subcarriers in a multipath environment.

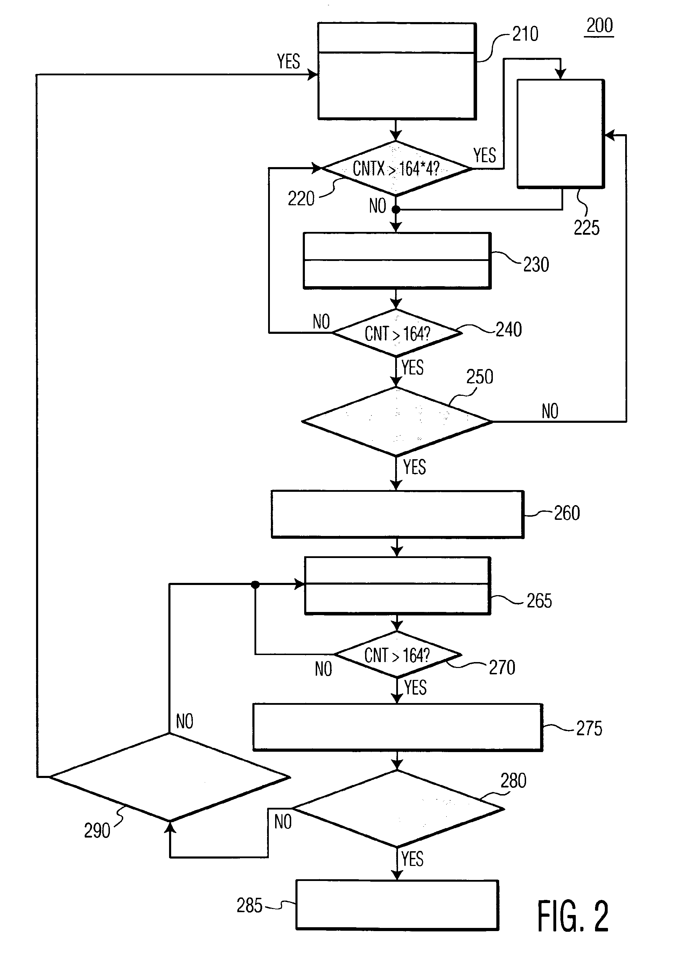

As noted above, the UWB transmitters frequency hop between the available bands. So, for example, initially a UWB transmitter may hop between the channels 1-3, as illustrated in FIG. 2, one symbol per hop.

Meanwhile, the preamble consists of a sequence of a time-domain sequence and a frequency-domain sequence. The time domain sequence is intended to be used for burst detection, coarse timing error estimation and coarse frequency error estimation. The time domain sequence in each band is described by:

$$(1) \qquad [a_0 B, a_1 B, \ldots, a_{15} B]$$

where B is a 8-length spreading sequence and A= $\{a_0,...,a_{15}\}$ is a 16-length sequence. The values of both sequences are.proposed to be unique for each pico net in a given geographic area. Table 2 below shows proposed values of each of the sequences, which of course may change as standardization proceeds. Overall, for each band, a 165-length time domain preamble sequence is constructed consisting of 128-length sequence as defined above, a prefix (e.g., appends the last 32 bits or just zeros) and a small guard time.

## TABLE 2

| Preamble Pattern | Sequence A | | | | | | | | | | | | | | | |
|---|---|---|---|---|---|---|---|---|---|---|---|---|---|---|---|---|
| 1 | 1 | 1 | 1 | 1 | -1 | -1 | -1 | 1 | -1 | 1 | -1 | 1 | 1 | -1 | 1 | 1 |
| 2 | -1 | 1 | 1 | -1 | 1 | -1 | -1 | -1 | -1 | 1 | 1 | 1 | -1 | 1 | 1 | 1 |
| 3 | -1 | 1 | 1 | 1 | 1 | 1 | -1 | -1 | 1 | 1 | -1 | 1 | -1 | 1 | 1 | -1 |
| 4 | 1 | -1 | -1 | 1 | 1 | -1 | 1 | -1 | 1 | -1 | -1 | -1 | -1 | -1 | -1 | 1 |

| Preamble Pattern | Sequence B | | | | | | | |
|---|---|---|---|---|---|---|---|---|
| 1 | 1 | 1 | -1 | 1 | 1 | -1 | -1 | -1 |
| 2 | -1 | 1 | -1 | -1 | 1 | 1 | 1 | -1 |
| 3 | -1 | 1 | -1 | -1 | 1 | 1 | 1 | -1 |
| 4 | 1 | 1 | -1 | 1 | 1 | -1 | -1 | -1 |

Typically, a receiver needs to first detect the preamble before further signal processing steps can be undertaken.

International patent application publication No. WO00/77961 relates to an apparatus and method for achieving symbol timing and frequency synchronization, and more particularly, to an apparatus and method for synchronizing symbol timing and frequency in an orthogonal frequency division multiplexing system.

Accordingly, there is a need for a method and system for synchronizing a receiver to signal with unknown timing, such as an ultra wideband signal.

In one aspect of the invention, a method of acquiring synchronization with a signal according to claim 1 is provided.

In another aspect of the invention, an apparatus for detecting a received signal, as disclosed in claim 11 is provided.

sequence of the transmitted signal, a multiplier adapted to multiply a complex conjugate of a first one of the received signal and the delayed received signal, by the second one of the received signal and the delayed received signal to produce multiplication results, a first summation circuit adapted to sum the multiplication results over a first window, equal to M, to produce intermediate autocorrelation results, and a second summation circuit adapted to weigh L-1 intermediate autocorrelation results with corresponding weights, and to sum the L-1 weighted intermediate autocorrelation results to produce autocorrelation results; and a burst detector adapted to determine an autocorrelation peak of the autocorrelation results over a second window, to compare the autocorrelation peak to a threshold, and to detect the received signal when the autocorrelation peak exceeds the threshold.

In yet another aspect of the invention, a system for synchronizing a receiver to a transmitted signal, comprises: a correlator adapted to autocorrelate a received signal in a first band to produce first autocorrelation results, and subsequently to autocorrelate the received signal in a second band to produce second autocorrelation results; a burst detector adapted to receive the first autocorrelation results and to detect when the received signal is the transmitted signal; a frequency generator for the receiver adapted to generate a receiver frequency; a frequency error detector adapted to receive the second autocorrelation results and to determine a coarse frequency error between the receiver frequency and a frequency of the transmitted signal; a frequency correction circuit for adjusting the receiver frequency in response to the coarse frequency error to make the receiver frequency approximately equal to the transmitted frequency; and a frame synchronization detector adapted to detect a frame synchronization sequence of the transmitted signal.

FIG. 1 shows a band plan for operation of ultra-wideband (UWB) devices;

FIG. 2 shows a flowchart of a method of detecting and acquiring a multiband UWB signal;

FIG. 3 shows a functional block diagram of a system for synchronizing a receiver to a UWB signal transmitted by a multiband, frequency-hopping, UWB transmitter;

FIG. 4 shows a block diagram of a first embodiment of a hierarchical correlator;

FIG. 5 shows a simulated output of the hierarchical correlator of FIG. 4 in the presence of a UWB signal;

FIG. 6 shows a block diagram of a second embodiment of a hierarchical correlator;

FIG. 7 shows a block diagram of a correlator and burst detector.

While various principles and features of the methods and systems described below can be applied to a variety of communication systems, for illustration purposes the exemplary embodiments below will be described in the context of orthogonal frequency division multiplexed (OFDM) ultra wideband (UWB) system such as that described above. Of course, the scope of the invention is defined by the claims appended hereto, and is not limited by the particular embodiments described below.

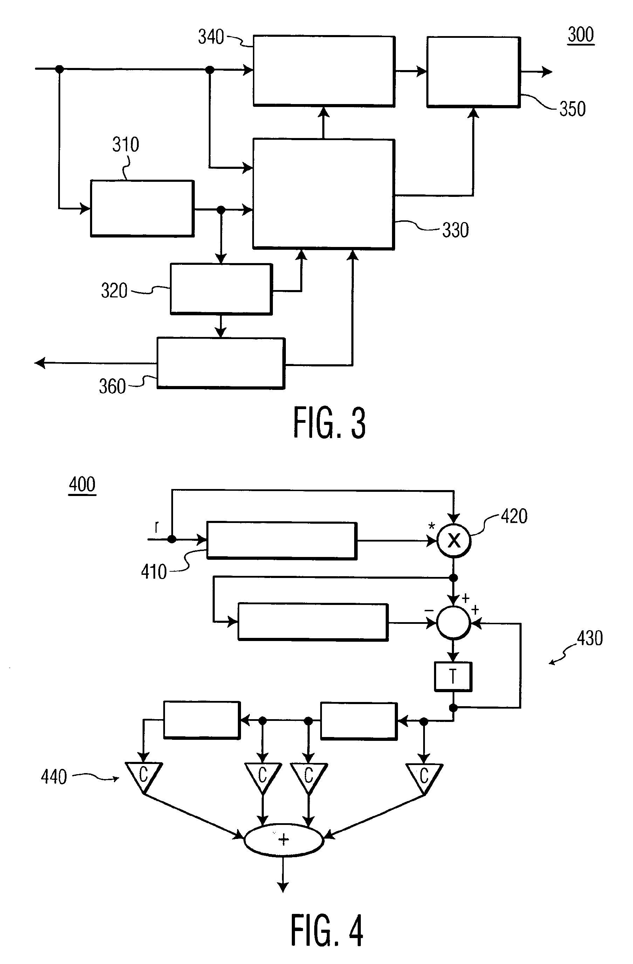

FIG. 3 shows a functional block diagram of a system 300 for synchronizing a receiver to a UWB signal transmitted by a multiband, frequency-hopping, UWB transmitter. The system 300 comprises a correlator 310, a burst detector 320, timing and frequency-error calculation and frame sync detection block 330, coarse frequency error corrector 340, prefix and guard time removal block 350, and hopping and AGC control block 360. Beneficially, the system 300 may execute a synchronization process such as the process 200 of FIG. 2, discussed below.

One correlation technique which may be employed by the correlator 310 to detect the presence of a UWB signal is a delayed auto-correlation on the received signal. The delayed correlation is organized in the form of correlating subsequent sequences where the delay equals to at least the length of one sequence. The conventional delayed correlation function, f(m), can be expressed by:

$$(2) \qquad f(m) = \sum_{k=0}^{J-1} r(m+k)r^*(m+D+k)$$

where r(n) is the received samples, D is the delay, and J is the correlation window. The delayed autocorrelation technique is extremely robust against frequency and timing errors.

However, a straight forward application of delayed correlation to the multiband UWB system is not efficient in terms of cost and performance.

Beneficially, the correlator 310 of FIG. 3 can exploit the hierarchical nature of the preamble of a signal (e.g., the UWB signal described above) in an autocorrelation arrangement. The hierarchical delayed-autocorrelation can be described by:

$$(3) \qquad f(m) = \sum_{l=0}^{L-2} c_l \sum_{k=0}^{M-1} r(m + Ml + k) r^*(m + Ml + M + k)$$

where L is the length of A, and M is the length of B, the spreading sequence. For the UWB system described above with respect to Table 2, L=16 and M=8. The sequence $C = \{c_0, \dots, c_{L-2}\}$ is obtained from $A = \{a_0, \dots, a_{15}\}$ as:

$$(4) \qquad c_l = a_l a_{(l+1)}$$

The main idea behind the hierarchical correlator is first to perform a correlation over sequence B (i.e. de-spread sequence B) and then to perform a correlation over sequence A. The hierarchical delayed-autocorrelation inherits the performance benefits of the conventional correlation algorithm in terms of its robustness to frequency/phase errors.

FIG. 4 shows one embodiment of a hierarchical correlator 400 which may be employed as the correlator 310 in FIG. 3. The correlator 400 includes an M-length delay 410, a multiplier 420, a first summation circuit 430, and a second summation circuit 440. Beneficially, the data path can be based on 1-bit input data at the expense of some performance degradation.

The M-length delay 410 delays the received signal, r, by M. The multiplier 420 multiplies the received signal by a complex conjugate of the delayed received signal to produce multiplication results. Alternatively, the multiplier may multiply the complex conjugate of the received signal by the delayed received signal to produce the multiplication results.

The first summation circuit 430 sums the multiplication results of the multiplier 420 over a first moving average window, equal to M, to produce intermediate autocorrelation results.

The second summation circuit 440 includes a delay 422 storing the intermediate autocorrelation results from the first summation circuit 430. The delay 422 has (L-1) outputs for outputting (L-1) intermediate autocorrelation results, each spaced apart by M. Each of the (L-1) intermediate autocorrelation results is weighed by the appropriate coefficient, $c_1$ from equation (4), and the (L-1) weighted intermediate autocorrelation results are summed to produce the final autocorrelation results.

Accordingly, the correlator 400 performs the autocorrelation function of equation (3) above.

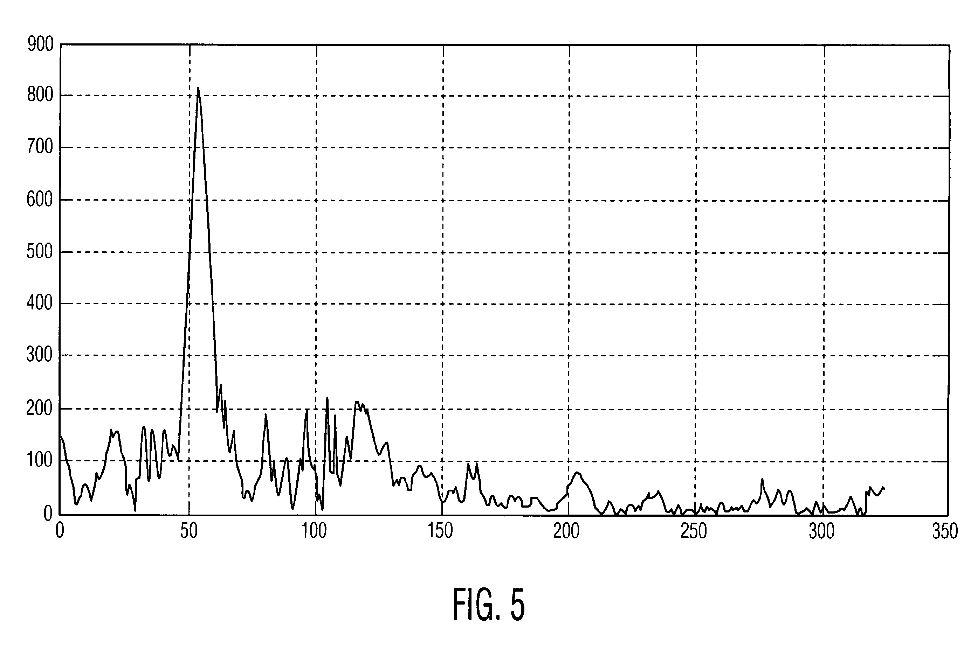

FIG. 5 shows the simulated output of the correlator of FIG. 4 for an input signal-to-noise ratio (SNR) of -6 dB in a multipath channel with a carrier frequency offset of 1 MHz. As can be seen, an excellent correlation peak is obtained. This facilitates accurate timing detection and synchronization.

Advantageously, the performance of the correlator 400 implementing equation (3) can be improved by employing multiple levels of hierarchical delayed correlations. These multi-level hierarchical correlations can be described as:

$$(5) \qquad f(m) = \sum_{i=0}^{G-1} y(m,i)$$

where

$$(6) \qquad y(m,i) = \sum_{l=0}^{L-2-i} c(l,i) \sum_{k=0}^{M-1} r(m + Ml + k) r^*(m + M(1 + l + i) + k)$$

where

$$(7) \quad c(l, i) = a_l a_{(l+1+i)}$$

and where G is the number of correlation branches, where $G \leq L-1$.

Under the assumption that the noise component of the received signal is uncorrelated and the length of the sequence is long, each doubling of the number of correlators gives about 3dB performance improvement against added noise. The multipath performance of the correlator should also improve since it is a form of time diversity.

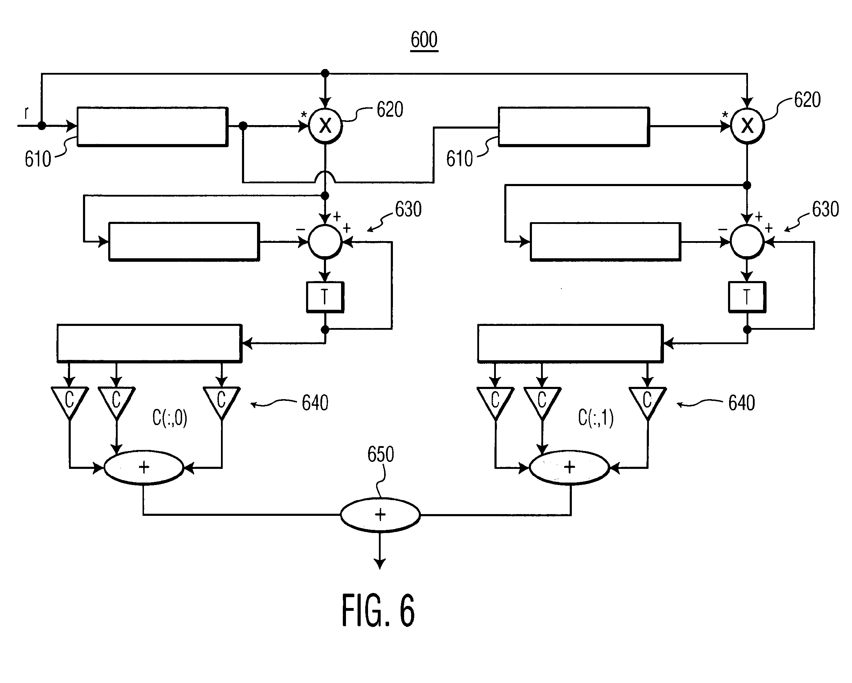

FIG. 6 shows another embodiment of a hierarchical correlator 600 which may be employed as the correlator 310 in FIG. 3. The correlator 600 includes first and second M-length delays 610, first and second multipliers 620, first and third summation circuits 630, second summation circuit 640, fourth summation circuit 645, and fifth summation circuit 650.

The hierarchical correlator 600 can be considered as comprising a first correlator 602, a second correlator 604, and a summation circuit 650. The first correlator 602 includes the first M-length delay 610, the first multiplier 620, the first summation circuit 630, and the second summation circuit 640. In that case, the first correlator 602 is the same as the correlator 400 of FIG. 4. Meanwhile, the second correlator includes the second M-length delay 610, the second multiplier 620, the third summation circuit 630, and the fourth summation circuit 645.

In general, the correlator 310 may comprise G individual correlators each of whose partial correlation outputs are summed together, where $G \leq L-1$.

Turning again to FIG. 6, the first M-length delay 610 delays the received signal by M, where M is equal to B.

The first multiplier 620 multiplies the received signal by a complex conjugate of the delayed received signal to produce first multiplication results. Alternatively, the first multiplier 620 may multiply a complex conjugate of the received signal by the delayed received signal to produce the first multiplication results.

The first summation circuit 630 sums the first multiplication results over a first window, equal to M, to produce first intermediate autocorrelation results.

The second summation circuit 640 sums (L-1) first intermediate autocorrelation results, each spaced apart by M and weighed by the appropriate coefficient, c(1, 0) from equation (7), and the (L-1) weighted first intermediate autocorrelation results are summed to produce first partial autocorrelation results.

Meanwhile, the second M-length delay 610 delays the delayed received signal from the first M-length delay 610.

The second multiplier 620 multiplies the received signal, by a complex conjugate of the received signal delayed by the second M-length delay, to produce second multiplication results. Alternatively, the second multiplier 620 may multiply a complex conjugate of the received signal, by the received signal delayed by the second M-length delay, to produce the second multiplication results.

The third summation circuit 630 sums the second multiplication results over the first window, equal to M, to produce second intermediate autocorrelation results.

The fourth summation circuit 645 sums (L-2) second intermediate autocorrelation results, each spaced apart by M and weighed by the appropriate coefficient, c(1, 1) from equation (7), and the (L-2) weighted autocorrelation results are summed to produce second partial autocorrelation results.

The fifth summation circuit 650 sums the first and second partial autocorrelation results from the correlators 602 and 604 to produce the autocorrelation results.

The techniques described above do not make use of the spreading sequence B. As a result, they are blind to the contents of this sequence. Nevertheless, if it is necessary to use a specific value of B in the correlation, then the hierarchical correlator can easily be modified into:

$$(8) \quad f(m) = \sum_{l=0}^{L-1} a_l \sum_{k=0}^{M-1} r(m + Ml + k) b_k$$

Employing this method may provide some slight multi-pico net isolation of the preamble. Nevertheless, its performance is not as reliable as that of the delayed correlator for frequency and phase errors.

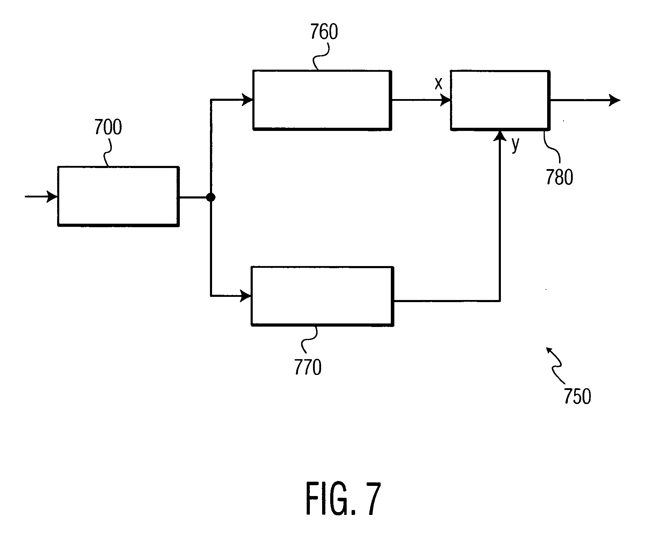

FIG. 7 shows a block diagram of a correlator 700 and burst detector 750. The correlator 700 may be the correlator 400 or 600 and may be employed as the correlator 310 in FIG. 3. The burst detector 750 may be employed as the burst detector 320 in FIG. 3.

The burst detector 750 includes a peak tracker 760, a window averaging unit 770, and a decision circuit 780.

The peak tracker 760 compares each autocorrelation result from the correlator 700 with a current correlation peak. If the new correlation result is greater than the current correlation peak, then the new correlation result is stored as the current correlation peak. Otherwise, the current correlation peak remains unchanged.

Beneficially, the burst detector 750 detects the existence of a correlation peak with respect to the correlation noise floor. This is achieved by comparing the correlation peak over a certain window to the average correlation output. During the burst detection step, the AGC is set to a fixed value so that it does not affect the operation. Usually, it is set to the maximum value to catch weak signals. Hopping is stopped during one burst acquisition period. The output of correlator 700 is passed through the window averaging unit 770. In order to improve robustness, the delay unit for the correlator should equal one symbol period during the entirety of which the front-end of the receiver is tuned to one frequency (band). If a valid signal is present in the band, then the output of the correlator 700 will be very small (correlation noise) during the subsequent one symbol period since during this time period the UWB transmitter will have hopped to a different channel, so that the receiver input is only noise. Once the first burst is detected, AGC and frequency hopping can be enabled for subsequent detection in all of the bands. If burst is not detected during N+1 symbol period where N is the number of bands, then the frequency tuner has to be stepped to the next band, as discussed above with respect to FIG. 2. If valid signal is present, this scheme should provide burst detection within two symbol periods (one for the actual signal and another for the decision time).

Beneficially, in particular the window averaging unit 770 averages the autocorrelation results over a moving window and outputs a threshold, $T_C$, to the decision circuit 780. Beneficially, the size of the moving window, e.g., "X," is larger than the size of the autocorrelation window of the correlator 700. According to the embodiment of FIG. 7, the threshold $T_C$ for the decision circuit 780 is a function of the average, V, of all of the autocorrelation results over the moving window. In particular, the threshold $T_C$ may be produced by multiplying V by a certain constant, k. Beneficially, the window averaging unit 770 may be a low pass filter. In an alternative embodiment, the threshold $T_C$ may be a predetermined fixed value.

A frequency error between the transmitter and receiver will result in inter-carrier interference and phase rotation. For a UWB system as described above, the carrier frequency error is small compared to the inter carrier spacing. For example, a 40ppm error and 5 GHz center frequency, the frequency error will be 200 kHz. This is about 4.8% of the intercarrier spacing. Such a frequency error does not result in significant degradation due to inter-carrier interference. Nevertheless, it still results in significant degradation due to phase rotation. As a result, the frequency error must be compensated. The compensation of the frequency error can be divided into coarse and fine compensation. The coarse frequency error is compensated using a digital mixer. The fine frequency error is compensated using a phase rotator after FFT.

Since the center frequencies are derived from a single crystal, it is tempting to think that only one frequency error for all the bands is needed. Even if one center crystal is used, the frequency error for all the bands is not identical. In general, the frequency error in a given band equals ppm*N*Fc, where ppm is the parts-per-million error of the crystal, N is the multiplication factor, and Fc is the crystal frequency. Ppm and Fc are identical to all the bands but N varies from band to band. As a result, the absolute frequency error won't be identical in each band.

It is also tempting to use the above relationship in computing the frequency error of each band. However, the frequency error estimation accuracy in each band is dependent on the SNR of the signal in that band. Since the SNR can vary due to fading, using one band's estimation to the other may result in degrading the estimation accuracy. Thus, it is generally preferable to keep the estimation for all the bands separate, i.e., each and will have a unique frequency error estimation estimated from only its one band.

One method of estimating the carrier frequency offset between transmitter and receiver is via differential detection. This turns out to be similar to the above-described hierarchical delayed correlator. Assuming that a correlation peak in the received channel occurs at time index "d," and, defining the inner correlation as:

$$(9) \qquad R(d,l) = \sum_{k=0}^{M-1} r(d + Ml + k) r^*(d + Ml + M + k)$$

Then it can easily be shown that the carrier-frequency offset is approximated by:

$$(10) \qquad f_\Delta = angle(R(d,l)) / (2 * \pi * M * T)$$

where T is the sampling rate of r(n). Indeed the above simple form of coarse time estimation does not take advantage of the available data. To take advantage of the available data, it can easily be shown that the coarse frequency error estimate is related to the maximum value of the hierarchical correlation output as:

$$(11) \qquad f_\Delta = angle(f(d))/(2 * \pi * M * T)$$

where f(d) is the autocorrelation peak that occurs at time "d."

FIG. 2 shows a flowchart of a robust synchronization process 200 for detecting and acquiring a multiband, UWB signal without requiring external precise timing and carrier frequency synchronization signals or controls. Advantageously, the method of FIG. 2 may operate with a correlator as described above with respect to FIGs. 4 and 6.

In a first step 210, the receiver is initialized the band is set to band 0, the AGC is set to it max, a correlator output counter is set to zero and the correlation peak is initialized to zero.

In a next step 220, the count value of the correlation counter, cntx, is compared to a maximum value, 4Y, which represents the maximum number of correlation results to be obtained in any one band. In the embodiment of FIG. 2, the maximum number (4Y) of correlation results to be detected in any one band is {(length of time domain preamble sequence -1)*(number of bands +1)}, (e.g., 164*4). If the maximum number of correlation results to be obtained in any one band has not been reached, then the process proceeds to a step 230. Otherwise, if the maximum number of correlation results to be obtained in any one band has been reached, than in a step 225 the receiver is switched to the next band, all counters are reset, and the process proceeds to the step 230.

In the step 230, if the maximum number of correlation results to be obtained in any one band has not been reached, then a new correlation is performed and the new correlation result, x, is compared to a current correlation peak for the current band. If the new correlation result, x, is greater than the current correlation peak, then the new correlation result, x, is stored as the current correlation peak, and the correlator output counter is reset to zero. Otherwise, the correlation counter is incremented and the current correlation peak remains unchanged.

In a step 240, the correlation count is compared to a correlation time interval, Y. In the embodiment of FIG. 2, the correlation time interval Y is {length of time domain preamble sequence -1}, (e.g., 164). If the correlation count is less than or equal to Y, then the process returns to step 220. Otherwise, the process proceeds to the step 250.

In a step 250, the current correlation peak is compared to a correlation threshold, $T_C$. Beneficially, the threshold $T_C$ may be determined as a function of a moving average, V, of all of the autocorrelation results, f(m), over a moving window, X. As discussed in more detail below, the correlation results are passed through a window averaging unit that can be implemented using a simple low pass filter. Alternatively, the threshold $T_C$ may be a predetermined fixed value. If the current correlation peak does not exceed the threshold $T_C$, then no true correlation peak is identified and no burst is detected. In that case, the process returns to the step 225. Otherwise, the process proceeds to a step 260.

On the other hand, if the correlation peak exceeds the threshold $T_C$, then a true correlation peak is identified and a burst is detected. In that case, in a step 260 the receiver is switched to the next band, all counters are reset, the AGC loop is restarted, and the process proceeds to the step 265.

In a step 265, a new correlation is performed and the new correlation output, x, is compared to a current correlation peak for the current band. If the new correlation output, x, is greater than the current correlation peak, then the new correlation output, x, is stored as the current correlation peak, and the correlator output counter is reset to zero. Otherwise, the correlation counter is incremented and the current correlation peak remains unchanged.

In a step 270, the correlation count is compared to a correlation time interval, Y {length of time domain preamble sequence -1}, (e.g., 164). If the correlation count is less than or equal to Y, then the process returns to step 265. Otherwise, the process proceeds to the step 275.

In a step 275, the peak correlation value is recorded and used to calculate a frequency error, as will be discussed in further detail below. Then, using the burst timing and corrected frequency from this and prior steps, frame synchronization is checked on all three bands.

In a step 280, it is checked whether frame synchronization is obtained on all three bands. If frame sync is obtained, then the receiver synchronization has been accomplished, and the process ends in a step 285.

Otherwise, if frame synchronization is not obtained on all three bands, then in a step 290, the process of seeking frame sync is repeated for a total of 24 symbol periods. If the frame sync is obtained within the 24 symbol periods, then the process returns to the step 265. Meanwhile, if the frame sync is not obtained within 24 symbol periods, then the process returns to the step 210 and starts all over.

**Claims**

**1.** A method of acquiring synchronization with a signal, comprising:

selecting a first band (210);
searching for an autocorrelation peak in the signal in the first band (230), including,

repeatedly autocorrelating the signal in the first band over a time interval, Y, to produce a plurality of autocorrelation results, and
identifying the autocorrelation peak as being the autocorrelation result having a greatest value; and

comparing the autocorrelation peak to a threshold and determining that the signal is detected when the autocorrelation peak exceeds the threshold (250), wherein autocorrelating the signal comprises:
delaying the signal by a delay, M, equal to a length of a spreading sequence (B) of a time-domain preamble sequence of the signal;
multiplying a complex conjugate of a first one of the signal and the delayed signal, by the second one of the signal and the delayed signal to produce multiplication results;
summing the multiplication results over a first window equal to M to produce intermediate autocorrelation results, wherein a delay between successive intermediate autocorrelation results is M;
weighing L-1 intermediate autocorrelation results by corresponding weights, where the weights are not all the same;
summing the L-1 weighted intermediate autocorrelation results to produce autocorrelation results, where L is equal to a length of the time-domain sequence (A) of the preamble sequence.

2. The method of claim 1, wherein the threshold is determined from characteristics of the signal (250).

3. The method of claim 1, wherein the threshold is fixed.

4. The method of claim 1, wherein the autocorrelation results of claim 1 correspond to first partial aurocorrelation results and wherein autocorrelating the signal further comprises:

delaying the signal by a delay 2M;
multiplying a complex conjugate of the first one of the signal and the signal delayed by 2M, by the second one of the signal and the signal delayed by 2M to produce second multiplication results;
summing the second multiplication results over the first window equal to M to produce other intermediate autocorrelation results;
weighing L-2 the other intermediate autocorrelation results by corresponding weights, where the weights are not all the same;
summing the L-2 weighted other intermediate autocorrelation results to produce second partial autocorrelation results; and
adding the first and second partial autocorrelation results to produce autocorrelation results.

5. The method of claim 1, wherein the threshold is a function of an average of all of the autocorrelation results over the time interval, Y.

6. The method of claim 1, further comprising, in response to no autocorrelation peak being detected in the first band within a time interval 4Y,

selecting the second band (225);
searching for an autocorrelation peak in the signal in the second band (230);
comparing the autocorrelation peak to the threshold and determining that the signal is detected when the autocorrelation peak exceeds the threshold (250);
in response to detecting the signal, selecting a third band (260);
searching for an autocorrelation peak in the signal in the third band (265);
determining the coarse frequency error in the signal from the autocorrelation peak in the third band (275);
correcting for the coarse frequency error in the signal; and
detecting the frame synchronization sequence of the signal.

7. The method of claim 1, further comprising in response to detecting the signal

selecting a second band (260);
searching for an autocorrelation peak in the signal in the second band (265), including,

repeatedly autocorrelating the signal in the second band over a time interval, Y, to produce a plurality of second autocorrelation results, and

identifying the autocorrelation peak in the signal in the second band as being the autocorrelation result having a greatest value;

determining a coarse frequency error in the signal from the autocorrelation peak in the second band (275);

correcting for the coarse frequency error in the signal; and

detecting a frame synchronization sequence of the signal.

**8.** The method of claim 7, wherein searching for an autocorrelation peak in the signal in the second band comprises:

repeatedly autocorrelating the signal over a time interval, Y, to produce a plurality of autocorrelation results; and

identifying the autocorrelation peak as being the autocorrelation result having a greatest value.

**9.** The method of claim 8, wherein the coarse frequency error in the signal is determined from the autocorrelation peak in the second band, f(d), as:

$$f_\Delta = (angle(f(d)))/(2 * \pi * M * T),$$

**10.** The method of claim 9, wherein f(d) is determined as:

$$f(d) = \sum_{l=0}^{L-1} c_l \sum_{k=0}^{M-1} r(d + Ml + k) r^*(d + Ml + M + k) \}$$

where $r(z)$ are samples of the received signal;

where M equals a length of a spreading sequence, $\{a_0,...,a_{15}\}$, of a time-domain preamble sequence of the signal, and

where $c_1 = a_1 a_{(1+1)}$.

**11.** An apparatus for detecting a received signal, comprising:

a correlator (310, 400, 600, 700), including,

a first M-length delay (410, 610) adapted to delay the received signal, where M is equal to a length of a spreading sequence of a time-domain preamble sequence of the transmitted signal,

a multiplier (420, 620) adapted to multiply a complex conjugate of a first one of the received signal and the delayed received signal, by the second one of the received signal and the delayed received signal to produce multiplication results,

a first summation circuit (430, 630) adapted to sum the multiplication results over a first window, equal to M, to produce intermediate autocorrelation results, and

a second summation circuit (440, 640) adapted to weigh L-1 intermediate autocorrelation results with corresponding weights, and to sum the L-1 weighted intermediate autocorrelation results to produce autocorrelation results; and

a burst detector (320, 750) adapted to determine an autocorrelation peak of the autocorrelation results over a second window, to compare the autocorrelation peak to a threshold, and to detect the received signal when the autocorrelation peak exceeds the threshold.

**12.** The apparatus of claim 11, where the burst detector (750) comprises:

a moving window averager (770) adapted to average the autocorrelation results over a time interval, X, to produce an average peak value, V;

a peak tracker (760) adapted to detect the largest autocorrelation result, P, over the time interval X; and

a peak detector (780) adapted to determine that the received signal is the transmitted signal when P > V*k, where k is a fixed constant.

**13.** The burst detector of claim 11, where the correlator (320, 600, 700) further comprises:

a second M-length delay (620) adapted to delay the delayed received signal from the first M-length delay;
a second multiplier (630) adapted to multiply a complex conjugate of a first one of the received signal and the received signal delayed by the second M-length delay, by the second one of the received signal and the received signal delayed by the second M-length delay to produce second multiplication results;
a third summation circuit (630) adapted to sum the second multiplication results over the first window, equal to M, to produce second intermediate autocorrelation results;
a fourth summation circuit (640) adapted to weigh L-2 second intermediate autocorrelation results with corresponding weights, and to sum the L-2 weighted second intermediate autocorrelation results to produce the autocorrelation results, where the second summation circuit outputs first partial autocorrelation results, and the fourth summation circuit outputs seconds partial autocorrelation results; and
a fifth summation circuit (650) adapted to add the first and second partial autocorrelation results to output the autocorrelation results.

**14.** The apparatus of claim 11, further comprising:

a frequency generator for the receiver adapted to generate a receiver frequency;
a frequency error detector (330) adapted to receive the second autocorrelation results and to determine a coarse frequency error between the receiver frequency and a frequency of the transmitted signal;
a frequency correction circuit (340) for adjusting the receiver frequency in response to the coarse frequency error to make the receiver frequency approximately equal to the transmitted frequency; and
a frame synchronization detector (330) adapted to detect a frame synchronization sequence of the transmitted signal.

**Patentansprüche**

**1.** Verfahren zur Erzielung der Synchronisierung mit einem Signal, wobei das - Verfahren Folgendes umfasst:

- Auswählen eines ersten Bandes (210);
- Suchen nach einem Autokorrelationspeaks im Signal im ersten Band (230), mit

- wiederholtem Autokorrelieren des Signals im ersten Band über ein Zeitintervall Y, um eine Vielzahl von Autokorrelationsergebnissen zu erhalten, und
- Identifizieren des Autokorrelationspeaks als das Autokorrelationsergebnis mit einem größten Wert; und

- Vergleichen des Autokorrelationspeaks mit einem Schwellenwert und Festlegen, dass das Signal detektiert ist, wenn der Autokorrelationspeak den Schwellenwert (250) überschreitet, wobei das Autokorrelieren des Signals Folgendes umfasst:
- Verzögern des Signals um eine Verzögerung M gleich einer Länge einer Spreizsequenz (B) einer Zeitbereich-Präambelsequenz des Signals;
- Multiplizieren einer komplexen Konjugierten eines ersten Signals, entweder des Signals oder des verzögerten Signals, mit dem zweiten Signal, entweder dem Signal oder dem verzögerten Signal, um Multiplikationsergebnisse zu erzeugen;
- Summieren der Multiplikationsergebnisse über ein erstes Fenster gleich M, um Zwischenautokorrelationsergebnisse zu erzeugen, wobei eine Verzögerung zwischen aufeinanderfolgenden Zwischenautokorrelationsergebnissen M ist;
- Gewichten von L-1 Zwischenautokorrelationsergebnissen durch entsprechende Gewichte, wobei die Gewichte nicht alle gleich sind;
- Summieren der L-1 gewichteten Zwischenautokorrelationsergebnisse, um Autokorrelationsergebnisse zu erzeugen, wobei L gleich einer Länge der Zeitbereichsequenz (A) der Präambelsequenz ist.

**2.** Verfahren nach Anspruch 1, wobei der Schwellenwert anhand von Eigenschaften des Signals bestimmt wird (250).

**3.** Verfahren nach Anspruch 1, wobei der Schwellenwert festgelegt ist.

4. Verfahren nach Anspruch 1, wobei die Autokorrelationsergebnisse von Anspruch 1 den ersten partiellen Autokorrelationsergebnissen entsprechen und wobei das Autokorrelieren des Signals weiterhin Folgendes umfasst:

- Verzögern des Signals um eine Verzögerung 2M;
- Multiplizieren einer komplexen Konjugierten des ersten Signals, entweder des Signals oder des um 2M verzögerten Signals, mit dem zweiten Signal, entweder dem Signal oder dem um 2M verzögerten Signal, um zweite Multiplikationsergebnisse zu erzeugen;
- Summieren der zweiten Multiplikationsergebnisse über das erste Fenster gleich M, um weitere Zwischenautokorrelationsergebnisse zu erzeugen;
- Gewichten von L-2 der weiteren Zwischenautokorrelationsergebnissen durch entsprechende Gewichte, wobei die Gewichte nicht alle gleich sind;
- Summieren der L-2 gewichteten weiteren Zwischenautokorrelationsergebnisse, um zweite partielle Autokorrelationsergebnisse zu erzeugen; und
- Addieren der ersten und der zweiten partiellen Autokorrelationsergebnisse, um Autokorrelationsergebnisse zu erzeugen.

5. Verfahren nach Anspruch 1, wobei der Schwellenwert eine Funktion des Mittelwertes aller Autokorrelationsergebnisse über das Zeitintervall Y ist.

6. Verfahren nach Anspruch 1, das weiterhin in Reaktion darauf, dass in dem ersten Band innerhalb eines Zeitintervalls 4Y kein Autokorrelationspeak detektiert wird, Folgendes umfasst:

- Auswählen des zweiten Bandes (225);
- Suchen nach einem Autokorrelationspeak im Signal im zweiten Band (230);
- Vergleichen des Autokorrelationspeaks mit dem Schwellenwert und Festlegen, dass das Signal detektiert ist, wenn der Autokorrelationspeak den Schwellenwert überschreitet (250);
- in Reaktion auf das Detektieren des Signals Auswählen eines dritten Bandes (260);
- Suchen nach einem Autokorrelationspeak im Signal im dritten Band (265);
- Ermitteln des groben Frequenzfehlers im Signal anhand des Autokorrelationspeaks im dritten Band (275);
- Korrigieren des groben Frequenzfehlers im Signal; und
- Detektieren der Rahmensynchronisierungssequenz des Signals.

7. Verfahren nach Anspruch 1, das weiterhin in Reaktion auf das Detektieren des Signals Folgendes umfasst:

- Auswählen eines zweiten Bandes (260);
- Suchen nach einem Autokorrelationspeak im Signal im zweiten Band (265), mit

  - wiederholtem Autokorrelieren des Signals im zweiten Band über ein Zeitintervall Y, um eine Vielzahl von zweiten Autokorrelationsergebnissen zu erhalten, und
  - Identifizieren des Autokorrelationspeaks im Signal im zweiten Band als das Autokorrelationsergebnis mit einem größten Wert;

- Bestimmen eines groben Frequenzfehlers im Signal anhand des Autokorrelationspeaks im zweiten Band (275);
- Korrigieren des groben Frequenzfehlers im Signal; und
- Detektieren einer Rahmensynchronisierungssequenz des Signals.

8. Verfahren nach Anspruch 7, wobei das Suchen nach einem Autokorrelationspeak im Signal im zweiten Band Folgendes umfasst:

- wiederholtes Autokorrelieren des Signals über ein Zeitintervall Y, um eine Vielzahl von Autokorrelationsergebnissen zu erzeugen; und
- Identifizieren des Autokorrelationspeaks als das Autokorrelationsergebnis mit einem größten Wert.

9. Verfahren nach Anspruch 8, wobei der grobe Frequenzfehler im Signal anhand des Autokorrelationspeaks im zweiten Band f(d) bestimmt wird als:

$$f_\Delta = (Winkel\ (f(d)))\ /\ (2 * \pi * M * T).$$

**10.** Verfahren nach Anspruch 9, wobei f(d) bestimmt wird als:

$$f(d) = \sum_{l=0}^{L-1} c_l \sum_{k=0}^{M-1} r(d + Ml + k)r * (d + Ml + M + k)$$

wobei r(z) Abtastwerte des empfangenen Signals sind;
wobei M einer Länge einer Spreizsequenz {$a_0$, ..., $a_{15}$) einer Zeitbereich-Präambelsequenz des Signals ent-
spricht, und
wobei $c_1 = a_1 a_{(1+1)}$ ist.

**11.** Gerät zum Detektieren eines empfangenen Signals, das Folgendes umfasst:

- einen Korrelator (310, 400, 600, 700) mit

- einer ersten M-Längen-Verzögerungseinheit (410, 610), die vorgesehen ist, um das empfangene Signal
zu verzögern, wobei M einer Länge einer Spreizsequenz einer Zeitbereich-Präambelsequenz des übertragenen Signals entspricht,
- einem Multiplizierer (420, 620), der vorgesehen ist, um eine komplexe Konjugierte eines ersten Signals,
entweder des empfangenen Signals oder des verzögerten empfangenen Signals, mit dem zweiten Signal,
entweder dem empfangenen Signal oder dem empfangenen verzögerten Signal, zu multiplizieren, um
Multiplikationsergebnisse zu erhalten,
- einer ersten Summierschaltung (430, 630), die vorgesehen ist, um die Multiplikationsergebnisse über ein
erstes Fenster gleich M zu summieren, um Zwischenautokorrelationsergebnisse zu erzeugen, und
- einer zweiten Summierschaltung (440, 640), die vorgesehen ist, um L-1 Zwischenautokorrelationsergebnisse mit entsprechenden Gewichten zu gewichten und um die L-1 gewichteten Zwischenautokorrelationsergebnisse zu summieren, um Autokorrelationsergebnisse zu erzeugen, und

- einen Burstdetektor (320, 750), der vorgesehen ist, um einen Autokorrelationspeak der Autokorrelationsergebnisse über ein zweites Fenster zu bestimmen, um den Autokorrelationspeak mit einem Schwellenwert zu
vergleichen, und um das empfangene Signal zu detektieren, wenn der Autokorrelationspeak den Schwellenwert
überschreitet.

**12.** Gerät nach Anspruch 11, wobei der Burstdetektor (750) Folgendes umfasst:

- ein Bewegtfenster-Mittelwertbildungsmittel (770), das vorgesehen ist, um die Autokorrelationsergebnisse über
ein Zeitintervall X zu mitteln und einen gemittelten Peakwert V zu erzeugen;
- einen Peak-Verfolger (760), der vorgesehen ist, um das größte Autokorrelationsergebnis P über das Zeitintervall X zu detektieren, und
- einen Peakdetektor (780), der vorgesehen ist, um festzulegen, dass das empfangene Signal das übertragene
Signal ist, wenn P > V * k, wobei k eine feste Konstante ist.

**13.** Burstdetektor nach Anspruch 11, wobei der Korrelator (320, 600, 700) weiterhin Folgendes umfasst:

- eine zweite M-Längen-Verzögerungseinheit (620), die vorgesehen ist, um das verzögerte empfangene Signal
von der ersten M-Längen-Verzögerungseinheit zu verzögern;
- einen zweiten Multiplizierer (630), der vorgesehen ist, um eine komplexe Konjugierte eines ersten Signals,
entweder des verzögerten Signals oder des empfangenen, durch die zweite M-Längen-Verzögerungseinheit
verzögerten Signals, mit dem zweiten Signal, entweder dem empfangenen Signal oder dem durch die zweite
M-Längen-Verzögerungseinheit verzögerten empfangenen Signal, zu multiplizieren, um zweite Multiplikationsergebnisse zu erhalten;
- eine dritte Summierschaltung (630), die vorgesehen ist, um die zweiten Multiplikationsergebnisse über das
erste Fenster gleich M zu summieren, um zweite Zwischenautokorrelationsergebnisse zu erzeugen,

- eine vierte Summierschaltung (640), die vorgesehen ist, um L-2 zweite Zwischenautokorrelationsergebnisse mit entsprechenden Gewichten zu gewichten und die L-2 gewichteten zweiten Zwischenautokorrelationsergebnisse zu summieren, um die Autokorrelationsergebnisse zu erzeugen, wobei die zweite Summierschaltung erste partielle Autokorrelationsergebnisse ausgibt und die vierte Summierschaltung zweite partielle Autokorrelationsergebnisse ausgibt; und

- eine fünfte Summierschaltung (650), die vorgesehen ist, um das erste und das zweite partielle Autokorrelationsergebnis zu addieren, um die Autokorrelationsergebnisse auszugeben.

**14.** Gerät nach Anspruch 11, das weiterhin Folgendes umfasst:

- einen Frequenzgenerator für den Empfänger, der dafür vorgesehen ist, eine Empfängerfrequenz zu erzeugen;
- einen Frequenzfehlerdetektor (330), der dafür vorgesehen ist, um die zweiten Autokorrelationsergebnisse zu empfangen und einen groben Frequenzfehler zwischen der Empfängerfrequenz und einer Frequenz des übertragenen Signals zu ermitteln;
- eine Frequenzkorrekturschaltung (340) zum Justieren der Empfängerfrequenz in Reaktion auf den groben Frequenzfehler, um die Empfängerfrequenz ungefähr an die übertragene Frequenz anzugleichen; und
- einen Rahmensynchronisierungsdetektor (330), der vorgesehen ist, um eine Rahmensynchronisierungssequenz des übertragenen Signals zu detektieren.

## Revendications

**1.** Procédé d'acquisition de synchronisation avec un signal, comprenant les étapes consistant à :

sélectionner une première bande (210) ;
rechercher une crête d'autocorrélation dans le signal dans la première bande (230), comprenant les étapes consistant à :

autocorréler à répétition le signal dans la première bande sur un intervalle de temps, Y, pour produire une pluralité de résultats d'autocorrélation, et
identifier la crête d'autocorrélation comme étant le résultat d'autocorrélation ayant la plus grande valeur ; et

comparer la crête d'autocorrélation à un seuil et déterminer que le signal est détecté lorsque la crête d'autocorrélation dépasse le seuil (250), dans lequel l'autocorrélation du signal comprend les étapes consistant à :
retarder le signal d'un délai, M, égal à une longueur d'une séquence d'étalement (B) d'une séquence de préambule de domaine temporel du signal ;
multiplier un conjugué complexe d'un premier du signal et du signal retardé, par le deuxième du signal et du signal retardé pour produire des résultats de multiplication ;
sommer les résultats de multiplication sur une première fenêtre égale à M pour produire des résultats d'autocorrélation intermédiaires, dans lequel un délai entre des résultats d'autocorrélation intermédiaires successifs est M ;
pondérer L-1 résultats d'autocorrélation intermédiaires par des poids correspondants, où les poids ne sont pas tous les mêmes ;
sommer les L-1 résultats d'autocorrélation intermédiaires pondérés pour produire des résultats d'autocorrélation, où L est égal à une longueur de la séquence de domaine temporel (A) de la séquence de préambule.

**2.** Procédé selon la revendication 1, dans lequel le seuil est déterminé à partir de caractéristiques du signal (250).

**3.** Procédé selon la revendication 1, dans lequel le seuil est fixe.

**4.** Procédé selon la revendication 1, dans lequel les résultats d'autocorrélation de la revendication 1 correspondent à des premiers résultats d'autocorrélation partiels et dans lequel l'autocorrélation du signal comprend en outre les étapes consistant à :

retarder le signal d'un délai 2M ;
multiplier un conjugué complexe du premier du signal et du signal retardé par 2M, par le deuxième du signal et du signal retardé par 2M pour produire des deuxièmes résultats de multiplication ;
sommer les deuxièmes résultats de multiplication sur la première fenêtre égale à M pour produire d'autres résultats d'autocorrélation intermédiaires ;

pondérer les L-2 autres résultats de corrélation intermédiaires par des poids correspondants, où les poids ne sont pas tous les mêmes ;

sommer les L-2 autres résultats d'autocorrélation intermédiaires pondérés pour produire des deuxièmes résultats d'autocorrélation partiels ; et

ajouter les premiers et deuxièmes résultats d'autocorrélation partiels pour produire des résultats d'autocorrélation.

**5.** Procédé selon la revendication 1, dans lequel le seuil est une fonction d'une moyenne de tous les résultats d'autocorrélation sur l'intervalle de temps, Y.

**6.** Procédé selon la revendication 1, comprenant en outre, en réponse au fait qu'aucune crête d'autocorrélation n'est détectée dans la première bande à l'intérieur d'un intervalle de temps 4Y, les étapes consistant à :

sélectionner la deuxième bande (225) ;

rechercher une crête d'autocorrélation dans le signal dans la deuxième bande (230) ;

comparer la crête d'autocorrélation au seuil et déterminer que le signal est détecté lorsque la crête d'autocorrélation dépasse le seuil (250) ;

en réponse à la détection du signal, sélectionner une troisième bande (260) ;

rechercher une crête d'autocorrélation dans le signal dans la troisième bande (265) ;

déterminer l'erreur de fréquence grossière dans le signal à partir de la crête d'autocorrélation dans la troisième bande (275) ;

corriger l'erreur de fréquence grossière dans le signal ; et

détecter la séquence de synchronisation de trame du signal.

**7.** Procédé selon la revendication 1, comprenant en outre, en réponse à la détection du signal, les étapes consistant à :

sélectionner une deuxième bande (260) ;

rechercher une crête d'autocorrélation dans le signal dans la deuxième bande (265), comprenant les étapes consistant à :

autocorréler à répétition le signal dans la deuxième bande sur un intervalle de temps, Y, pour produire une pluralité de deuxièmes résultats d'autocorrélation, et

identifier la crête d'autocorrélation dans le signal dans la deuxième bande comme étant le résultat d'autocorrélation ayant la plus grande valeur ;

déterminer une erreur de fréquence grossière dans le signal à partir de la crête d'autocorrélation dans la deuxième bande (275) ;

corriger l'erreur de fréquence grossière dans le signal ; et

détecter une séquence de synchronisation de trame du signal.

**8.** Procédé selon la revendication 7, dans lequel la recherche d'une crête d'autocorrélation dans le signal dans la deuxième bande comprend les étapes consistant à :

autocorréler à répétition le signal sur un intervalle de temps, Y, pour produire une pluralité de résultats d'autocorrélation ; et

identifier la crête d'autocorrélation comme étant le résultat d'autocorrélation ayant la plus grande valeur.

**9.** Procédé selon la revendication 8, dans lequel l'erreur de fréquence grossière dans le signal est déterminée à partir de la crête d'autocorrélation dans la deuxième bande, f(d), en tant que :

$$f_\Delta = (\mathrm{angle}(f(\mathrm{d})) / (2 * \pi * M * T),$$

**10.** Procédé selon la revendication 9, dans lequel f(d) est déterminé en tant que :

$$f(d) = \sum_{l=0}^{L-1} c_l \sum_{k=0}^{M-1} r(d + Ml + k) r * (d + Ml + M + k)$$

où $r(z)$ sont des échantillons du signal reçu ;
où $M$ est égal à une longueur d'une séquence d'étalement, $\{a_0, ..., a_{15}\}$, d'une séquence de préambule de domaine temporel du signal, et
où $c_1 = a_1 a_{(1+1)}$.

**11.** Dispositif pour détecter un signal reçu, comprenant :

un corrélateur (310, 400, 600, 700), comprenant :

un premier délai de longueur M (410, 610) apte à retarder le signal reçu, où M est égal à une longueur d'une séquence d'étalement d'une séquence de préambule de domaine temporel du signal transmis,
un multiplicateur (420, 620) apte à multiplier un conjugué complexe d'un premier du signal reçu et du signal reçu retardé, par le deuxième du signal reçu et du signal reçu retardé pour produire des résultats de multiplication,
un premier circuit de sommation (430, 630) apte à sommer les résultats de multiplication sur une première fenêtre, égale à M, pour produire des résultats d'autocorrélation intermédiaires, et
un deuxième circuit de sommation (440, 640) apte à pondérer L-1 résultats d'autocorrélation intermédiaires par des poids correspondants, et à sommer les L-1 résultats d'autocorrélation intermédiaires pondérés pour produire des résultats d'autocorrélation ; et

un détecteur de rafale (320, 750) apte à déterminer une crête d'autocorrélation des résultats d'autocorrélation sur une deuxième fenêtre, pour comparer la crête d'autocorrélation à un seuil, et à détecter le signal reçu lorsque la crête d'autocorrélation dépasse le seuil.

**12.** Dispositif selon la revendication 11, dans lequel le détecteur de rafale (750) comprend :

un moyenneur de fenêtre mobile (770) apte à moyenner les résultats d'autocorrélation sur un intervalle de temps, X, pour produire une valeur de crête moyenne, V ;
un suiveur de crête (760) apte à détecter le plus grand résultat d'autocorrélation, P, sur l'intervalle de temps X ; et
un détecteur de crête (780) apte à déterminer que le signal reçu est le signal transmis lorsque $P > V*k$, où k est une constante fixe.

**13.** Détecteur de rafale selon la revendication 11, dans lequel le corrélateur (320, 600, 700) comprend en outre :

un deuxième délai de longueur M (620) apte à retarder le signal reçu retardé du premier délai de longueur M ;
un deuxième multiplicateur (630) apte à multiplier un conjugué complexe d'un premier du signal reçu et du signal reçu retardé par le deuxième délai de longueur M, par le deuxième du signal reçu et du signal reçu retardé par le deuxième délai de longueur M pour produire des deuxièmes résultats de multiplication ;
un troisième circuit de sommation (630) apte à sommer les deuxièmes résultats de multiplication sur la première fenêtre, égale à M, pour produire des deuxièmes résultats d'autocorrélation intermédiaires ;
un quatrième circuit de sommation (640) apte à pondérer L-2 deuxièmes résultats d'autocorrélation intermédiaires par des poids correspondants, et à sommer les L-2 deuxièmes résultats d'autocorrélation pondérés pour produire les résultats d'autocorrélation, où le deuxième circuit de sommation délivre des premiers résultats d'autocorrélation partiels, et le quatrième circuit de sommation délivre des deuxièmes résultats d'autocorrélation partiels ; et
un cinquième circuit de sommation (650) apte à ajouter les premiers et deuxièmes résultats d'autocorrélation partiels pour délivrer les résultats d'autocorrélation.

**14.** Dispositif selon la revendication 11, comprenant en outre :

un générateur de fréquence pour le récepteur apte à générer une fréquence de récepteur ;
un détecteur d'erreur de fréquence (330) apte à recevoir les deuxièmes résultats d'autocorrélation et à déterminer une erreur de fréquence grossière entre la fréquence de récepteur et une fréquence du signal transmis ;

un circuit de correction de fréquence (340) pour ajuster la fréquence de récepteur en réponse à l'erreur de fréquence grossière pour rendre la fréquence de récepteur approximativement égale à la fréquence transmise ; et

un détecteur de synchronisation de trame (330) apte à détecter une séquence de synchronisation de trame du signal transmis.

FIG. 1

FIG. 2

FIG. 3

FIG. 4

FIG. 5

FIG. 6

EP 1 856 811 B1

C(:,0)

C(:,1)

FIG. 7

**EP 1 856 811 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0077961 A